# EUROPÄISCHE PATENTSCHRIFT

(11) **EP 4 026 224 B1**
(45) Veröffentlichungstag und Bekanntmachung des Hinweises auf die Patenterteilung: **23.09.2026**
(21) Anmeldenummer: 20785436.5
(22) Anmeldetag: 07.09.2020
(51) Int. Cl.: H02J 9/06, H02K 16/04

(54) **VORRICHTUNG ZUR UNTERBRECHUNGSFREIEN STROMVERSORGUNG MIT EINEM ENERGIESPEICHER UND EINER ROTIERENDEN ELEKTRISCHEN MASCHINE**
DEVICE FOR UNINTERUPPTIBLE SUPPLY OF POWER, COMPRISING AN ENERGY STORAGE MEANS AND A ROTATING ELECTRIC MACHINE
DISPOSITIF POUR FOURNIR DE L'ÉNERGIE SANS INTERRUPTION, COMPRENANT UN MOYEN DE STOCKAGE D'ÉNERGIE ET UNE MACHINE ÉLECTRIQUE TOURNANTE

(30) Priorität: 05.09.2019 DE 102019123864
(43) Veröffentlichungstag der Anmeldung: 13.07.2022
(73) Patentinhaber: Piller Group GmbH, 37520 Osterode am Harz (DE)
(72) Erfinder: SEIDEL, Detlev, 37085 Göttingen (DE); KLAUENBERG, Armin, 37520 Osterode (DE)
(74) Vertreter: REHBERG HÜPPE + PARTNER
(86) Internationale Anmeldenummer: PCT/EP2020/074917
(87) Internationale Veröffentlichungsnummer: WO 2021/044049

(56) Entgegenhaltungen:
- EP-A1- 3 179 614
- EP-A1- 3 480 914

## Beschreibung

### TECHNISCHES GEBIET DER ERFINDUNG

Die Erfindung bezieht sich auf eine Vorrichtung zur unterbrechungsfreien Stromversorgung mit einer eine Generatorwicklung und einer von der Generatorwicklung elektrisch isolierte Motorwicklung aufweisenden rotierenden elektrischen Maschine und mit mindestens einem Energiespeicher für elektrische Energie, der über einen Wechselstrom ausgebenden Wandler an die mindestens eine Motorwicklung angeschlossen ist.

Mit einer solchen Vorrichtung zur unterbrechungsfreien Stromversorgung, die hier kurz auch als USV bezeichnet wird, kann nicht nur eine elektrische Last bei Ausfall eines Versorgungsnetzes zumindest vorübergehend mit elektrischer Leistung versorgt werden. Wenn die Generatorwicklung beispielsweise an einen Abzweig einer Netzdrossel zwischen dem Versorgungsnetz und der Last angeschlossen wird, verbessert die Vorrichtung auch die Qualität der Energieversorgung der Last durch das Versorgungsnetz, indem sie dessen Spannungsschwankungen nivelliert.

Wenn die USV die Stromversorgung der Last bei ausfallendem Versorgungsnetz übernimmt, entnimmt sie die dafür benötigte elektrische Energie dem Energiespeicher. Auch beim Zuschalten des Energiespeichers wirkt sich die Verbesserung der Qualität der Stromversorgung durch die rotierende elektrische Maschine positiv aus.

### STAND DER TECHNIK

Das Produkt UBTD+ der Anmelderin ist eine USV mit den Merkmalen des Oberbegriffs des unabhängigen Patentanspruchs 1. Die Generatorwicklung ist zum Anschluss an einen Abzweig einer Netzdrossel vorgesehen, der näher an einer zu versorgenden Last als an einem Versorgungsnetz liegt. An die Generatorwicklung wird über den Wandler entweder ein Schwungrad oder eine Batterie als Energiespeicher angeschlossen. Der Rotor der elektrischen Maschine ist zudem an einen Dieselmotor ankuppelbar, um die Last nicht nur kurzfristig sondern auch über längere Zeiträume mit elektrischer Energie versorgen zu können. Der Energiespeicher kann jeweils über die Generatorwicklung und die Motorwicklung aus dem Versorgungsnetz aufgeladen werden. Dazu ist der Wandler über den der Energiespeicher an die Motorwicklung angeschlossen ist, bidirektional auszubilden, und während des Aufladevorgangs wird die Generatorwicklung als Motorwicklung und die Motorwicklung als Generatorwicklung genutzt. Es ist aber auch möglich, den Energiespeicher über einen weiteren Wandler direkt aus dem Versorgungsnetz aufzuladen. Bei der bekannten USV sind die Generatorwicklung und die Motorwicklung für Niederspannungen von unter 1000 V, typischerweise etwa 600 Volt ausgelegt. Wenn die bekannte USV an ein Mittelspannungsnetz angeschlossen wird, wird zwischen die Generatorwicklung und die Netzdrossel ein Transformator geschaltet. Das bekannte Produkt UBTD+ kann Leistungen bis zu etwa 3.000 kW bereitstellen. Um einen größeren Leistungsbedarf zu decken, werden mehrere derartige Produkte parallel gestaltet, wobei dann die von den einzelnen USV bereitgestellten elektrischen Leistungen aufeinander abzustimmen sind.

Aus der EP3 179 614 A1 ist ein Motorgenerator mit mehreren Statorwicklungen bekannt. Der Motorgenerator umfasst einen Stator, der längs einer Mittellinie angeordnet ist, die einen Startorpol, eine erste Statorwicklung und eine zweite Statorwicklung überspannt. Die erste Startorwicklung ist ebenso wie die zweite Statorwicklungen um den Statorpol gewickelt. Der Motorgenerator umfasst weiterhin einen Rotor, der axial von dem Stator beabstandet längs der Mittellinie angeordnet ist. Die erste Statorwicklung ist eine Hochspannungsstatorwicklung, und die zweite Statorwicklung ist eine Niederspannungsstartorwicklung. Der Motorgenerator ist ein Axialflussmotorgenerator, wobei die erste Statortwicklung längs des Statorpols axial an die zweite Statorwicklung angrenzt.

Aus der EP 3 480 914 A1 ist die Bereitstellung von Regelleistung für ein Stromnetz mit einer eine Lithiumionenbatterie aufweisenden USV bekannt. Dazu wird eine USV mit einem Netzanschluss, einem Lastanschluss und einem Energiespeicher verwendet. Der Energiespeicher kann über einen bidirektionalen DC/AC-Wandler an eine von zwei getrennten Wicklungen einer rotierenden elektrischen Maschine angeschlossen sein, deren andere Wicklung an einen Anzapf einer Drossel mit einem Netzanschluss und einem Lastanschluss angeschlossen ist. Der Energiespeicher weist die Lithiumionenbatterie auf.

### AUFGABE DER ERFINDUNG

Der Erfindung liegt die Aufgabe zugrunde, eine Vorrichtung zur unterbrechungsfreien Stromversorgung der eingangs beschriebenen Art aufzuzeigen, die zur Bereitstellung größere elektrischer Leistungen und im Weiteren auch zum direkten Anschluss an ein Mittelspannungsnetz geeignet ist.

### LÖSUNG

Die Aufgabe der Erfindung wird durch eine Vorrichtung zur unterbrechungsfreien Stromversorgung mit dem Merkmal des unabhängigen Patentanspruchs 1 gelöst. Die abhängigen Patentansprüche betreffen bevorzugte Ausführungsformen der erfindungsgemäßen Vorrichtung.

### BESCHREIBUNG DER ERFINDUNG

Bei einer erfindungsgemäßen Vorrichtung zur unterbrechungsfreien Stromversorgung weist eine rotierende elektrische Maschine eine Generatorwicklung und mehrere von der Generatorwicklung und voneinander elektrisch isolierte Motorwicklungen auf. Je Motorwicklung sind ein Energiespeicher für elektrische Energie und ein einen Wechselstrom ausgebender Wandler vorhanden, über den der Energiespeicher an die jeweilige Motorwicklung angeschlossen ist.

Indem die erfindungsgemäße USV mehrere Energiespeicher an mehreren Motorwicklungen aufweist, die über jeweils einen Wandler miteinander verbunden sind, kann die elektrische Leistung der USV unter Verwendung bisheriger Energiespeicher, also auch ohne Steigerung der Leistung der einzelnen Energiespeicher, vervielfacht werden. Auch die den einzelnen Energiespeichern zugeordneten Wandler und Motorwicklungen können dabei gleich bleiben. Sie müssen jeweils nicht für eine höhere Leistung ausgelegt werden als bisher. Auf die höhere Leistung muss im Wesentlichen nur die Generatorwicklung abgestimmt werden. Da die über die Generatorwicklung fließende elektrische Leistung aber nicht mehr über einen Wandler fließen muss, sondern insoweit direkt bzw. über eine Netzdrossel zu der zu versorgenden Last fließen kann, ist dies mit bekannten Mitteln zu beherrschen. Die höhere elektrische Leistung der neuen USV wird statt durch eine Vervielfachung aller ihrer Bestandteile ausschließlich durch eine Vervielfachung ihrer Motorwicklungen und ihrer Energiespeicher samt zugehöriger Wandler erreicht.

Bei einem Ausführungsbeispiel der erfindungsgemäßen Vorrichtung sind die mehreren Motorwicklungen vorzugsweise gleich ausgebildet. Auch die daran angeschlossenen Energiespeicher können gleich sein, ebenso wie die Wandler, die die Energiespeicher mit den Motorwicklungen verbinden. Bei gleicher Ausbildung der einzelnen Energiespeicher können diese in gleicher Weise angesteuert werden. Grundsätzlich ist es aber auch möglich, verschiedene Energiespeicher in der erfindungsgemäßen Vorrichtung zu kombinieren, beispielsweise ein Schwungrad, womit hier immer das Schwungrad einschließlich seiner elektrischen Maschine zu verstehen ist, und eine Batterie, um einerseits sehr schnell und andererseits längerfristig elektrische Leistung bereitstellen zu können oder um die Batterie vor Leistungsschwankungen zu schützen.

Ebenso wie die Generatorwicklung können die Motorwicklungen und die daran angeschlossene Wandler der erfindungsgemäßen Vorrichtung jeweils einphasig oder dreiphasig ausgebildet sein. Grundsätzlich ist auch eine zweiphasige Ausbildung oder eine Mischung von unterschiedlich phasigen Motorwicklungen möglich. Bevorzugt ist jedoch eine einheitlich ein- oder dreiphasige Ausbildung. Ob eine ein- oder eine dreiphasige Ausbildung günstiger ist, hängt von der elektrischen Leistung der einzelnen Energiespeicher ab. Für eine höhere elektrische Leistung ist eine dreiphasige Ausbildung der einzelnen Motorwicklungen wegen der dann bei gleicher Spannung geringeren Ströme durch die einzelnen Phasenwicklungen günstiger.

Die einzelnen Motorwicklungen gemäß einem Ausführungsbeispiel der erfindungsgemäßen Vorrichtung können zur phasenversetzten oder zur phasensynchronen Bestromung ausgebildet sein. Mit einer phasenversetzten Bestromung kann der Gleichlauf der rotierenden elektrischen Maschine optimiert werden. Motorwicklungen für eine phasensynchrone Bestromung können in einen einfacheren Gesamtaufbau der rotierenden elektrischen Maschine resultieren.

Entsprechend der Ausbildung der Motorwicklungen sind die einzelnen Wandler der Mehrzahl von Energiespeichern der erfindungsgemäßen Vorrichtung mit oder ohne Phasenversatz aufeinander zu synchronisieren.

Bei einem Ausführungsbeispiel der erfindungsgemäßen Vorrichtung ist es besonders bevorzugt, wenn die rotierende elektrische Maschine als rotierender Transformator ausgebildet ist, der über den Motorwicklungen anliegende Motorwechselspannungen in eine mindestens dreimal so hohe Generatorwechselspannung umspannt, die über der Generatorwicklung anliegt. Das Umspannverhältnis kann auch bei mindestens fünf oder mindestens zehn liegen. Das Umspannverhältnis der rotierenden elektrischen Maschine der erfindungsgemäßen Vorrichtung zeigt sich daran, dass die Generatorwicklung mindestens 3-mal oder mindestens 5-mal oder mindestens 10-mal so viele Windungen je Phase aufweist wie jede der Motorwicklungen.

Insbesondere kann gemäß einem Ausführungsbeispiel die erfindungsgemäße Vorrichtung so ausgelegt sein, dass die Wandler Niederspannungen als Motorwechselspannungen an den Motorwicklungen bereitstellen und dass die elektrische Maschine an der Generatorwicklung eine Mittelspannung als Generatorwechselspannung ausgibt. So kann die Generatorwicklung auch ohne einen Transformator direkt an ein Mittelspannungsnetz angeschlossen werden.

Neben der Umspannung kann die elektrische Maschine der erfindungsgemäßen Vorrichtung auch eine Frequenzwandlung zwischen den Motorwicklungen und der Generatorwicklung bewirken. So könnten beispielsweise die Wandler jeweils für Motorwechselspannungen von 400 Hz ausgelegt sein, die von der rotierenden elektrischen Maschine in eine Generatorwechselspannung von 50 Hz herabgesetzt werden.

Wie schon erwähnt wurde, wird die Generatorwicklung typischerweise an einen Abzweig einer Netzdrossel angeschlossen, die zwischen ein Versorgungsnetz und einer abzusichernde Last schaltbar ist, wobei der Abzweig regelmäßig näher an der Last als an dem Versorgungsnetz liegt. Bei der Netzdrossel kann es sich konkret um eine Mittelspannungsnetzdrossel handeln, die zwischen ein Mittelspannungsnetz und einer Mittelspannungslast schaltbar ist.

Im Detail kann die elektrische Maschine gemäß einem Ausführungsbeispiel der erfindungsgemäßen Vorrichtung eine Synchronmaschine mit einem mit den mehreren Motorwicklungen und der Generatorwicklung bewickelten gemeinsamen Stator und einem bürstenlos erregten gemeinsamen Rotor für die Motorwicklungen und die Generatorwicklung aufweisen. Aufgrund der verschiedenen Motorwicklungen handelt es sich bei der elektrischen Maschine um eine Sondermaschine. Jede einzelne der Wicklungen kann aber einen konventionellen Aufbau aufweisen.

Wie schon angedeutet wurde, können die Energiespeicher zum Beispiel statische Energiespeicher, wie beispielsweise Batterien und rotierende Energiespeicher, wie beispielsweise Schwungräder umfassen. In diesem Zusammenhang sind auch Superkondensatoren zu den Batterien zu zählen. In jedem Fall ist die vorliegende Erfindung nicht auf eine bestimmte Art von Energiespeicher beschränkt. Insbesondere müssen die Energiespeicher keine Gleichspannung bereitstellen, die dann von dem zugeordneten Wandler in eine Wechselspannung gewandelt wird. Der Energiespeicher kann auch eine Wechselspannung liefern, wie beispielsweise ein Schwungrad mit einer elektrischen Maschine in Form eines Wechselstromgenerators.

Bei einem Ausführungsbeispiel der erfindungsgemäßen Vorrichtung kann eine Kupplung vorhanden sein, über die eine Antriebswelle einer Brennkraftmaschine an den Rotor der elektrischen Maschine kuppelbar ist, um diese angetrieben von der Brennkraftmaschine längerfristig als Generator zu betreiben, als dies aus den an die Motorwicklungen angeschlossenen Energiespeichern möglich ist.

Der Schutzumfang der Erfindung wird durch den unabhängigen Anspruch 1 definiert. Vorteilhafte Weiterbildungen der Erfindung ergeben sich aus den abhängigen Patentansprüchen, der Beschreibung und den Zeichnungen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein schematisches Einlinienschaltbild einer ersten Ausführungsform einer erfindungsgemäßen Vorrichtung zur unterbrechungsfreien Stromversorgung und
- **Fig. 2**: ist ein schematisches Einlinienschaltbild einer zweiten Ausführungsform der erfindungsgemäßen Vorrichtung.

### FIGURENBESCHREIBUNG

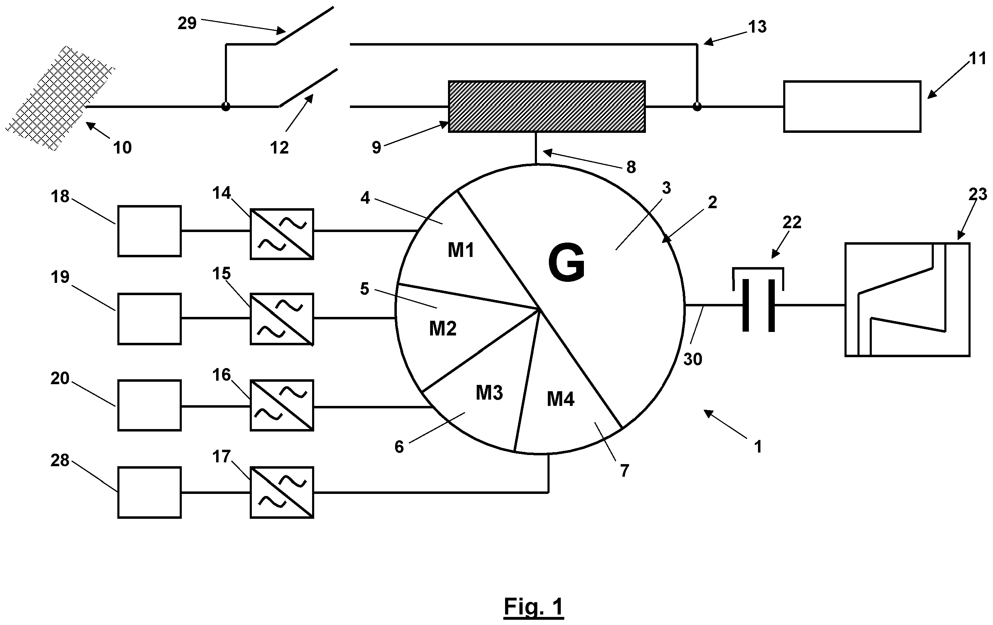

Die in **Fig. 1** dargestellte Vorrichtung 1 zur unterbrechungsfreien Stromversorgung, im Folgenden auch kurz USV 1 genannt, umfasst als zentrales Element eine rotierende elektrische Maschine 2 mit einer Generatorwicklung 3 bzw. G und hier vier Motorwicklungen 4 bis 7 bzw. M1 bis M4. Die Generatorwicklung 3 und die Motorwicklungen 4 bis 7 sind elektrisch gegeneinander isoliert und es kann sich jeweils um einphasige oder mehrphasige Wicklungen handeln. Typischerweise ist sowohl die Generatorwicklung 3 als auch jede der Motorwicklungen 4 bis 7 eine dreiphasige Wicklung. Die Wicklungen 3 bis 7 sind auf einem gemeinsamen Stator der elektrischen Maschine 2 gewickelt. Dabei ist die Generatorwicklung 3 mit den Motorwicklungen 4 bis 7 über einen Rotor 30 der elektrischen Maschine 2 gekoppelt. Die elektrische Maschine 2 ist als rotierender Transformator konstruiert, der an den Motorwicklungen 4 bis 7 anliegende Motorwechselspannungen im Niederspannungsbereich von beispielsweise 600 V auf eine Generatorwechselspannung an der Generatorwicklung 3 im Mittelspannungsbereich von beispielsweise 10 kV hochspannt. Die elektrische Maschine 2 ist so zum Anschluss an einen Abzweig 8 einer Mittelspannungsnetzdrossel 9 vorgesehen. Die Mittelspannungsnetzdrossel 9 ist zwischen ein Mittelspannungsversorgungsnetz 10 und eine Mittelspannungslast 11 geschaltet. Dabei liegt der Abzweig näher an der Mittelspannungslast 11 als an dem Versorgungsnetz 10, und ein Trennschalter 12, der im Falle eines Ausfalls des Mittelspannungsversorgungsnetzes 10 zu öffnen ist, liegt auf der die Mittelspannungsversorgungsnetz 10 zugekehrten Seite der Mittelspannungsnetzdrossel 9. In einem optionalen Bypass 13 zu der Mittelspannungsnetzdrossel 9 ist ein Bypassschalter 29 zur Aktivierung und Deaktivierung des Bypasses vorgesehen. Im Netzbetrieb liegt die Netzwechselspannung des Mittelspannungsnetzes 10 an der Generatorwicklung 3 an, auch wenn nur der Bypassschalter 29 geschlossen ist. Dann wirkt die Generatorwicklung 3 als Motorwicklung für die elektrische Maschine 2. Unter Betrieb der Motorwicklungen 4 bis 7 als Generatorwicklungen können über bidirektionale AC/AC-Wandler 14 bis 17 Energiespeicher 18 bis 21 für elektrische Energie aufgeladen werden. Diese elektrische Energie steht dann bei einem Ausfall des Versorgungsnetzes 10 zur Verfügung. Je nach Typ des Energiespeichers können die Wandler 14 bis 17 auch DC/AC-Wandler sein. Hier sind die AC/AC-Wandler auf rotierende Energiespeicher 18 bis 21 in Form von elektrischen Maschinen mit an ihre Rotoren angekoppelten Schwungmassen abgestimmt. Bei einem Ausfall des Versorgungsnetzes 10 wird die elektrische Energie aus den Energiespeichern 18 bis 21 über die ihnen zugeordneten Wandler 14 bis 17 in die Motorwicklungen 4 bis 7 eingespeist und über die Generatorwicklung 3 und die Mittelspannungsnetzdrossel 9 der Last 11 zur Verfügung gestellt. Zusätzlich ist über eine Kupplung 22 eine Brennkraftmaschine 23 an den Rotor 30 der elektrischen Maschine 2 ankuppelbar, um auch längerfristige Ausfälle des Versorgungsnetzes 10 mit der USV 1 überbrücken zu können. Durch die Mehrzahl der Motorwicklungen 4 bis 7 und der angeschlossenen Energiespeicher 18 bis 21 ist die Leistung der USV 1 gegenüber nur einer einzigen Motowicklung mit einem einzigen Energiespeicher vervielfacht. Zugleich ersetzt die als rotierender Transformator ausgebildete elektrische Maschine einen zusätzlichen statischen Transformator, um die eingangsseitige Niederspannung der elektrischen Maschine 2 in eine ausgangsseitige Mittelspannung zu transformieren.

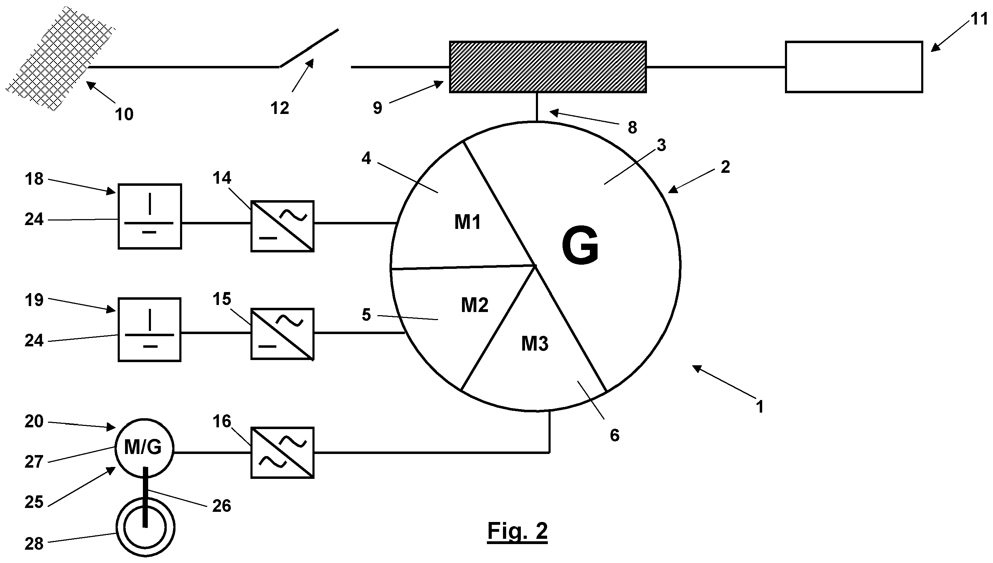

Die in **Fig. 2** dargestellte Ausführungsform der USV 1 unterscheidet sich in folgenden Details von der Ausführungsform gemäß Fig. 1. Die elektrische Maschine 2 weist hier nicht vier sondern drei Motorwicklungen 4 bis 6 bzw. M1 bis M3 auf, an die drei Energiespeicher 18 bis 20 über jeweils einen Wandler 14 bis 16 angeschlossen sind. Außerdem ist der optionale Bypass 13 zu der Mittelspannungsnetzdrossel 9 nicht vorhanden. Bei den Energiespeichern 18 bis 20 handelt es sich hier um zwei Batterien 24 beziehungsweise Batteriebänke und ein Schwungrad 25 mit einer an den Rotor 26 einer elektrischen Maschine 27 angekoppelten Schwungmasse 28. Dabei kann das Schwungrad 25 insbesondere zur kurzfristigen Bereitstellung schwankender elektrischer Leistung vorgesehen sein, während die Batterien 24 eine relativ konstante Basisleistung zur Verfügung stellen.

### BEZUGSZEICHENLISTE

- 1: Vorrichtung zur unterbrechungsfreien Stromversorgung (USV)
- 2: Rotierende elektrische Maschine
- 3: Generatorwicklung
- 4 bis 7: Motorwicklung
- 8: Abzweig
- 9: Mittelspannungsnetzdrossel
- 10: Mittelspannungsnetz
- 11: Mittelspannungslast
- 12: Trennschalter
- 13: Bypass
- 14 bis 17: Wandler
- 18 bis 21: Energiespeicher
- 22: Kupplung
- 23: Brennkraftmaschine
- 24: Batterie
- 25: Schwungrad
- 26: Rotor
- 27: Elektrische Maschine
- 28: Schwungmasse
- 29: Bypass Schalter
- 30: Rotor

## Patentansprüche

1. Vorrichtung (1) zur unterbrechungsfreien Stromversorgung mit
- einer eine Generatorwicklung (3) und mindestens eine von der Generatorwicklung (3) elektrisch isolierte Motorwicklung (4-7) aufweisenden rotierenden elektrischen Maschine (2) und
- mindestens einem Energiespeicher (18-21) für elektrische Energie, der über einen einen Wechselstrom ausgebenden Wandler (14-17) an die mindestens eine Motorwicklung (4-7) angeschlossen ist,
**dadurch gekennzeichnet,**
- **dass** die rotierende elektrische Maschine (2) mindestens eine von der Generatorwicklung (3) und der mindestens einen Motorwicklung (4-7) elektrisch isolierte weitere Motorwicklung (4-7) aufweist, an die mindestens ein weiterer Energiespeicher (18-21) für elektrische Energie über einen weiteren Wandler (14-17) angeschlossen ist, der einen weiteren Wechselstrom ausgibt.

2. Vorrichtung (1) nach Anspruch 1, **dadurch gekennzeichnet, dass** die mindestens eine Motorwicklung (4-7) und die mindestens eine weitere Motorwicklung (4-7) gleich ausgebildet sind.

3. Vorrichtung (1) nach Anspruch 1 oder 2, **dadurch gekennzeichnet, dass** die mindestens eine Motorwicklung (4-7) und der daran angeschlossene Wandler (14-17) sowie die mindestens eine weitere Motorwicklung (4-7) und der daran angeschlossene weitere Wandler (14-17) einphasig oder dreiphasig ausgebildet sind.

4. Vorrichtung (1) nach einem der vorhergehenden Ansprüche, **dadurch gekennzeichnet, dass** die mindestens eine Motorwicklung (4-7) und die mindestens eine weitere Motorwicklung (4-7) zur phasenversetzten oder phasensynchronen Bestromung ausgebildet sind.

5. Vorrichtung (1) nach Anspruch 4, **dadurch gekennzeichnet, dass** getrennte Wandler (14-17) des mindestens einen Energiespeichers (18-21) und des mindestens einen weiteren Energiespeichers (18-21) mit oder ohne Phasenversatz aufeinander synchronisiert sind.

6. Vorrichtung (1) nach einem der vorhergehenden Ansprüche, **dadurch gekennzeichnet, dass** die rotierende elektrische Maschine (2) als rotierender Transformator ausgebildet ist, der eine an der mindestens einen Motorwicklung (4-7) anliegende Motorwechselspannung in eine mindestens 3-mal oder mindestens 5-mal oder mindestens 10-mal so hohe an der Generatorwicklung (3) anliegende Generatorwechselspannung umspannt.

7. Vorrichtung (1) nach Anspruch 6, **dadurch gekennzeichnet, dass** die Generatorwicklung (3) mindestens 3-mal oder mindestens 5-mal oder mindestens 10-mal so viele Windungen je Phase aufweist wie die mindestens eine Motorwicklung (4-7) oder wie jede der Motorwicklungen (4-7).

8. Vorrichtung (1) nach Anspruch 6 oder 7, **dadurch gekennzeichnet, dass** der Wandler (14-17) und der weitere Wandler (14-17) Niederspannungen als Motorwechselspannungen an der mindestens einen Motorwicklung (4-7) und der mindestens einen weiteren Motorwicklung (4-7) bereitstellen und dass die elektrische Maschine (2) an der Generatorwicklung (3) eine Mittelspannung als Generatorwechselspannung ausgibt.

9. Vorrichtung (1) nach einem der vorhergehenden Ansprüche, **dadurch gekennzeichnet, dass** die Generatorwicklung (3) an einen Abzweig einer Netzdrossel angeschlossen ist, die zwischen ein Versorgungsnetz und eine abzusichernde Last schaltbar ist.

10. Vorrichtung (1) nach Anspruch 9, **dadurch gekennzeichnet, dass** die Netzdrossel eine Mittelspannungsnetzdrossel ist, die zwischen ein Mittelspannungsnetz und eine Mittelspannungslast schaltbar ist.

11. Vorrichtung (1) nach einem der vorhergehenden Ansprüche, **dadurch gekennzeichnet, dass** die elektrische Maschine (2) eine Synchronmaschine mit einem mit der mindestens einen Motorwicklung (4-7), der mindestens einen weiteren Motorwicklung (4-7) und der Generatorwicklung (3) bewickelten gemeinsamen Stator und einen bürstenlos erregten gemeinsamen Rotor für die Motorwicklungen (4-7) und die Generatorwicklung (3) aufweist.

12. Vorrichtung (1) nach einem der vorhergehenden Ansprüche, **dadurch gekennzeichnet, dass** der mindestens eine Energiespeicher (18-21) und der mindestens eine weitere Energiespeicher (18-21) aus statischen und rotierenden Energiespeichern ausgewählt sind.

13. Vorrichtung (1) nach mindestens einem der vorhergehenden Ansprüche, **dadurch gekennzeichnet, dass** eine Kupplung (22) vorhanden ist, über die eine Abtriebswelle einer Brennkraftmaschine (23) an den oder einen Rotor (30) der elektrischen Maschine (2) kuppelbar ist.

## Claims

1. Apparatus (1) for uninterruptible power supply, comprising
- a rotating electric machine (2) having a generator winding (3) and at least one motor winding (4-7) which is electrically insulated from the generator winding (3), and
- at least one energy storage (18-21) for electric energy which is connected to the at least one motor winding (4-7) via an inverter (14-17) outputting an alternating current,
**characterized in**
- **that** the rotating electric machine (2) has at least one further motor winding (4-7) which is electrically insulated from the generator winding (3) and the at least one motor winding (4-7) and to which at least one further energy storage (18-21) for electric energy is connected via a further inverter (14-17) outputting a further alternating current.

2. Apparatus (1) of claim 1, **characterized in that** the at least one motor winding (4-7) and the at least one further motor winding (4-7) are equal.

3. Apparatus (1) of claim 1 or 2, **characterized in that** the at least one motor winding (4-7) and the inverter connected thereto as well as the at least one further motor winding (4-7) and the further inverter (14-17) connected thereto are single phase or three-phase.

4. Apparatus (1) of any of the preceding claims, **characterized in that** the at least one motor winding (4-7) and the at least one further motor winding (4-7) are configured for current feed at offset phases or synchronous phases.

5. Apparatus (1) of claim 4, **characterized in that** separate inverters (14-17) of the at least one energy storage (18-21) and the at least one further energy storage (18-21) are synchronized with regard to each other with or without a phase offset.

6. Apparatus (1) of any of the preceding claims, **characterized in that** the rotating electric machine (2) is made as a rotating transformer which transforms a motor alternating voltage that is present at the at least one motor winding (4-7) into a generator alternating voltage that is present at the generator winding (3) and that is at least three times or at least five times or at least ten times as high.

7. Apparatus (1) of claim 6, **characterized in that** the generator winding (3) has at least three times or at least five times or at least ten times as many windings per phase as the at least one motor winding (4-7) or as each of the motor windings (4-7).

8. Apparatus (1) of claim 6 or 7, **characterized in that** the inverter (14-17) and the further inverter (14-17) provide low voltages as motor alternating voltages at the at least one motor winding (4-7) and the at least one further motor winding (4-7), and that the electric machine (2) outputs a medium voltage as a generator alternating voltage at the generator winding (3).

9. Apparatus (1) of any of the preceding claims, **characterized in that** the generator winding (3) is connected to a tap of a grid choke which is connectable between a supply grid and a load to be supported.

10. Apparatus (1) of claim 9, **characterized in that** the grid choke is a medium voltage grid choke which is connectable between a medium voltage grid and a medium voltage load.

11. Apparatus (1) of any of the preceding claims, **characterized in that** the electric machine (2) is a synchronous machine having a common stator onto which the at least one motor winding (4-7), the at least one further motor winding (4-7) and the generator winding (3) are wound, and a brushlessly excited rotor common for the motor windings (4-7) and the generator winding (3).

12. Apparatus (1) of any of the preceding claims, **characterized in that** the at least one energy storage (18-21) and the at least one further energy storage (18-21) are selected from static and rotating energy storages.

13. Apparatus (1) of at least one of the preceding claims, **characterized in that** a coupling (22) is provided via which an output shaft of a combustion engine (23) can be coupled to the or a rotor (30) of the electric machine (2).

## Revendications

1. Dispositif (1) pour alimentation sans coupure comprenant
- une machine électrique tournante (2) comprenant un enroulement de générateur (3) et au moins un enroulement de moteur (4-7) isolé électriquement de l'enroulement de générateur (3), et
- au moins un accumulateur d'énergie (18-21) pour énergie électrique, qui est raccordé à au moins un enroulement de moteur (4-7) via un convertisseur (14-17) délivrant un courant alternatif,
**caractérisé en ce que**
- la machine électrique tournante (2) comprend au moins un autre enroulement de moteur (4-7) isolé électriquement de l'enroulement de générateur (3) et de l'au moins un enroulement de moteur (4-7), auquel au moins un autre accumulateur d'énergie (18-21) pour énergie électrique est raccordé via un autre convertisseur (14-17) délivrant un autre courant alternatif.

2. Dispositif (1) selon la revendication 1, **caractérisé en ce que** l'au moins un enroulement de moteur (4-7) et l'au moins un autre enroulement de moteur (4-7) sont identiques.

3. Dispositif (1) selon la revendication 1 ou 2, **caractérisé en ce que** l'au moins un enroulement de moteur (4-7) et le convertisseur (14-17) qui y est raccordé, ainsi que l'au moins un autre enroulement de moteur (4-7) et l'autre convertisseur (14-17) qui y est raccordé, sont monophasés ou triphasés.

4. Dispositif (1) selon l'une des revendications précédentes, **caractérisé en ce que** l'au moins un enroulement de moteur (4-7) et l'au moins un autre enroulement de moteur (4-7) sont conçus pour une alimentation en courant déphasée ou en phase.

5. Dispositif (1) selon la revendication 4, **caractérisé en ce que** des convertisseurs séparés (14-17) de l'au moins un accumulateur d'énergie (18-21) et de l'au moins un autre accumulateur d'énergie (18-21) sont synchronisés l'un par rapport à l'autre avec ou sans décalage de phase.

6. Dispositif (1) selon l'une des revendications précédentes, **caractérisé en ce que** la machine électrique tournante (2) est conçue comme un transformateur tournant, qui transforme une tension alternative de moteur appliquée à l'au moins un enroulement de moteur (4-7) en une tension alternative de générateur appliquée à l'enroulement de générateur (3) au moins 3 fois, au moins 5 fois ou au moins 10 fois plus élevée.

7. Dispositif (1) selon la revendication 6, **caractérisé en ce que** l'enroulement de générateur (3) comporte au moins 3 fois, au moins 5 fois ou au moins 10 fois plus de spires par phase que l'au moins un enroulement de moteur (4-7) ou que chacun des enroulements de moteur (4-7).

8. Dispositif (1) selon la revendication 6 ou 7, **caractérisé en ce que** le convertisseur (14-17) et l'autre convertisseur (14-17) fournissent des basses tensions comme tensions alternatives de moteur à l'au moins un enroulement de moteur (4-7) et à l'au moins un autre enroulement de moteur (4-7), et **en ce que** la machine électrique (2) délivre à l'enroulement de générateur (3) une moyenne tension comme tension alternative de générateur.

9. Dispositif (1) selon l'une des revendications précédentes, **caractérisé en ce que** l'enroulement de générateur (3) est raccordé à une dérivation d'une réactance de réseau, laquelle est commutable entre un réseau d'alimentation et une charge à protéger.

10. Dispositif (1) selon la revendication 9, **caractérisé en ce que** la réactance de réseau est une réactance de réseau moyenne tension, laquelle est commutable entre un réseau moyenne tension et une charge moyenne tension.

11. Dispositif (1) selon l'une des revendications précédentes, **caractérisé en ce que** la machine électrique (2) est une machine synchrone avec un stator commun bobiné avec l'au moins un enroulement de moteur (4-7), l'au moins un autre enroulement de moteur (4-7) et l'enroulement de générateur (3), et un rotor commun excité sans balais pour les enroulements de moteur (4-7) et l'enroulement de générateur (3).

12. Dispositif (1) selon l'une des revendications précédentes, **caractérisé en ce que** l'au moins un accumulateur d'énergie (18-21) et l'au moins un autre accumulateur d'énergie (18-21) sont sélectionnés parmi des accumulateurs d'énergie statiques et tournants.

13. Dispositif (1) selon au moins une des revendications précédentes, **caractérisé en ce qu'**un accouplement (22) est présent, par lequel un arbre de sortie d'un moteur à combustion interne (23) est accouplable au ou à un rotor (30) de la machine électrique (2).
